# EUROPEAN PATENT SPECIFICATION

(11) **EP 4 576 403 B1**
(45) Date of publication and mention of the grant of the patent: **09.12.2026**
(21) Application number: 23854693.1
(22) Date of filing: 26.05.2023
(51) Int. Cl.: H01M 50/533, H01G 11/70, H01G 11/74, H01G 11/86, H01M 10/04, H01M 50/536

(54) **BATTERY AND METHOD FOR MANUFACTURING BATTERY**
BATTERIE UND VERFAHREN ZUR HERSTELLUNG DER BATTERIE
BATTERIE ET PROCÉDÉ DE FABRICATION DE BATTERIE

(30) Priority: 18.08.2022 JP 2022130676
(43) Date of publication of application: 25.06.2025
(73) Proprietor: Panasonic Energy Co., Ltd., Moriguchi-shi, Osaka 570-8511 (JP)
(72) Inventor: YAGI, Haruhisa, Kadoma-shi, Osaka 571-0057 (JP); MATSUMURA, Suguru, Kadoma-shi, Osaka 571-0057 (JP); HIROSE, Takayuki, Kadoma-shi, Osaka 571-0057 (JP); KUMAZAWA, Seiji, Kadoma-shi, Osaka 571-0057 (JP); TSUJI, Yuta, Kadoma-shi, Osaka 571-0057 (JP); SHINOBU, Tomoaki, Kadoma-shi, Osaka 571-0057 (JP); MORIYAMA, Yusuke, Kadoma-shi, Osaka 571-0057 (JP)
(74) Representative: Eisenführ Speiser
(86) International application number: PCT/JP2023/019784
(87) International publication number: WO 2024/038654

(56) References cited:
- WO-A1-2020/196094
- WO-A1-2020/196094
- JP-A- 2011 170 972
- KR-A- 20160 075 120
- KR-A- 20160 075 120
- US-A- 5 015 818
- US-A- 5 015 818
- US-A1- 2022 102 824
- US-A1- 2022 102 824

## Description

### [Technical Field]

The present disclosure relates to a battery according to the preamble of claim 1 and a battery manufacturing method according to the preamble of claim 6.

### [Background Art]

Conventionally, a battery has been known which includes an electrode group formed by winding a first electrode and a second electrode with a separator interposed therebetween, and a current collector plate having a welded portion that is welded to the first electrode (e.g., PTL 1 (Japanese Laid-Open Patent Publication No. 2011-170972)). In the battery of PTL 1, the welded portion of the current collector plate is formed through TIG welding. A battery showing the features of the preamble of claim 1 is known from US 2022/102824 A1.

### [Citation List]

### [Patent Literature]

PTL 1: Japanese Laid-Open Patent Publication No. 2011-170972

### [Summary of Invention]

### [Technical Problem]

However, when the welded portion is formed, constituent materials of the current collector plate and the like may fly off and be scattered. Such scattered materials are usually conductive and there is a risk that they will, for example, get between the first electrode and the second electrode, causing an electrical short circuit between them, which will result in a so-called internal short circuit. In this situation, one objective of the present disclosure is to suppress an internal short circuit in a battery.

### [Solution to Problem]

One aspect of the present disclosure relates to a battery according to claim 1. The battery includes:
an electrode group formed by winding a first electrode and a second electrode with a separator interposed therebetween; and a first current collector plate having at least one welded portion welded to the first electrode, in which the first current collector plate has at least a pair of magnetized portions that are arranged to sandwich the welded portion and are magnetized, and a magnetic force of the welded portion is smaller than a magnetic force of the magnetized portions.

Another aspect of the present disclosure relates to a battery manufacturing method according to claim 6. The manufacturing method includes: a first preparation step of preparing an electrode group formed by winding a first electrode and a second electrode with a separator interposed therebetween; a second preparation step of preparing a first current collector plate having at least one portion to be welded; a magnetization step of magnetizing the first current collector plate; and a welding step of welding the first current collector plate to the first electrode via the portion to be welded, in which in the welding step, the portion to be welded becomes a welded portion welded to the first electrode, and regions on both sides of the welded portion in the first current collector plate remain as at least a pair of magnetized portions having a magnetic force larger than a magnetic force of the welded portion.

### [Advantageous Effects of Invention]

According to the present disclosure, it is possible to suppress an internal short circuit in a battery.

The novel features of the present invention are set forth in the appended claims, but the present invention, both in terms of structure and content, together with other objects and features of the present application, will be better understood from the following detailed description taken in conjunction with the drawings.

### [Brief Description of Drawings]

FIG. 1 is a vertical cross-sectional view showing a configuration of a battery of a first embodiment.
FIG. 2 is a perspective view showing a first current collector plate of the first embodiment.
FIG. 3 is a cross-sectional view taken along line III-III in FIG. 2.
FIGS. 4(a) and 4(b) are perspective views for illustrating a battery manufacturing method of the first embodiment, where FIG. 4(a) shows a magnetization step and FIG. 4(b) shows a welding step.
FIG. 5 is a view corresponding to FIG. 3, showing a first current collector plate of a second embodiment.
FIG. 6 is a perspective view showing a magnetization step of the second embodiment.

### [Description of Embodiments]

Embodiments of the battery and the battery manufacturing method according to the present disclosure are described below by way of example. However, the present disclosure is not limited to the examples described below. In the following description, specific numerical values and materials may be given as examples, but other numerical values and materials may also be applied as long as the effect of the present invention as defined in the claims is obtained.

### (Battery)

A battery according to the present disclosure may be a primary battery such as a lithium primary battery, or a secondary battery such as an alkaline storage battery (nickel-metal hydride battery, nickel-cadmium battery, etc.), a lithium ion battery, or a lithium metal secondary battery. The battery according to the present disclosure includes an electrode group and a first current collector plate. In the present disclosure, the category of secondary batteries also includes electricity storage devices (e.g., lithium ion capacitors) in which at least one of a positive electrode and a negative electrode is an electrode that develops capacitance through a Faraday reaction.

The electrode group is formed by winding a first electrode and a second electrode with a separator interposed therebetween. In other words, the electrode group is a wound electrode group having a first electrode, a second electrode, and a separator interposed between the two electrodes. The electrode group has a columnar outer shape, and may have, for example, a cylindrical or prismatic outer shape. One of the first electrode and the second electrode is a positive electrode, and the other of the first electrode and the second electrode is a negative electrode.

The first electrode, the second electrode, and the separator may each be in the form of a long sheet (or a strip). The first electrode may have a first current collector in the form of a long sheet, and a first active material layer supported on the first current collector. The second electrode may have a second current collector in the form of a long sheet, and a second active material layer supported on the second current collector. The separator may be constituted of a porous sheet that is ion-permeable and has insulating properties. Examples of the porous sheet include a thin film having micropores, a woven fabric, and a nonwoven fabric.

Hereinafter, taking a lithium ion battery as an example, the first active material layer may be provided on both sides of the first current collector, or on one side of the first current collector. If the first electrode is a positive electrode, the first current collector is a positive electrode current collector (e.g., may be constituted of an aluminum foil or an aluminum alloy foil), and the first active material layer is a positive electrode active material layer (e.g., may include a lithium-containing transition metal oxide). If the first electrode is a negative electrode, the first current collector is a negative electrode current collector (e.g., may be constituted of a copper foil or a copper alloy foil), and a negative electrode active material layer (e.g., may include a carbonaceous material) may be provided as the first active material layer.

The first current collector plate has at least one welded portion welded to the first electrode. If the first electrode is a positive electrode, the first current collector plate is a positive current collector plate (e.g., may be constituted of stainless steel, titanium, a titanium alloy, aluminum, or an aluminum alloy). If the first electrode is a negative electrode, the first current collector plate is a negative electrode current collector plate (e.g., may be constituted of nickel, a nickel alloy, copper, or a copper alloy). The welded portion may be formed through any type of welding (e.g., laser welding or resistance welding). The surface of the first current collector plate may be subjected to plating (e.g., lead-tin plating, nickel-tin plating, zinc-nickel plating, chrome plating, zinc plating, nickel plating, etc.) to improve weldability.

When the welded portion is formed, the constituent materials of the first current collector plate and the like may fly off and be scattered. As described above, the scattered materials at this time may cause an internal short circuit. In contrast, the first current collector plate of the present disclosure further includes at least a pair of magnetized portions that are arranged to sandwich the welded portion and are magnetized. Such a magnetized portion captures any scattered materials that may be generated when forming the welded portion, making it less likely that an internal short circuit will occur. In addition, a magnetic force of the welded portion is smaller than a magnetic force of the magnetized portions. This makes it possible to efficiently concentrate the magnetic field generated by the pair of magnetized portions in the vicinity of the welded portion, thereby increasing the probability of capturing the scattered materials.

The welded portion need not be magnetic. In this configuration, the magnetic field generated by the pair of magnetized portions can be concentrated more efficiently in the vicinity of the welded portion, further increasing the probability of capturing the scattered materials.

In the pair of magnetized portions, a magnetization direction of one magnetized portion and a magnetization direction of the other magnetized portion may be mutually opposite directions. For example, the magnetization direction of the one magnetized portion may be a direction from one side to another side in an axial direction of the battery, and the magnetization direction of the other magnetized portion may be a direction from the other side to the one side in the axial direction of the battery. In this configuration, a magnetic loop that circulates around the welded portion is generated between the pair of magnetized portions, further increasing the probability of capturing the scattered materials.

In the pair of magnetized portions, the magnetization direction of the one magnetized portion and the magnetization direction of the other magnetized portion may be the same direction. For example, the magnetization directions of both magnetized portions may be from the one side to the other side in the axial direction of the battery, or may be the opposite direction. In this configuration, since it is possible to use a magnet that is entirely magnetized in one direction to magnetize the pair of magnetized portions, it is easy to form the pair of magnetized portions.

The width of the welded portion may be larger on the side opposite to the first electrode than on the first electrode side. For example, the width of the welded portion may increase toward the side opposite to the first electrode from the first electrode side. The width of the welded portion at the end on the first electrode side may be, for example, 0.3 mm or more and 1.2 mm or less. The width of the welded portion may be, for example, 0.15 mm or more and 0.6 mm or less as an overall average value (or an average value of any five points).

### (Battery Manufacturing Method)

The battery manufacturing method according to the present disclosure can be used to manufacture, for example, the battery described above. The battery manufacturing method according to the present disclosure includes a first preparation step, a second preparation step, a magnetization step, and a welding step.

**In** the first preparation step, an electrode group is prepared by winding a first electrode and a second electrode with a separator interposed therebetween.

**In** the second preparation step, a first current collector plate having at least one portion to be welded is prepared. The portion to be welded is a portion that is to be welded in the welding step, and is not required to have characteristics (e.g., composition, shape, etc.) different from those of surrounding portions.

In the magnetization step, the first current collector plate is magnetized. The first current collector plate may be magnetized using a magnet, or in some cases, may be magnetized using a magnetizing coil. However, from the viewpoint of controllability of the magnetization direction, it is preferable that the first current collector plate is magnetized by using a magnet.

In the welding step, the first current collector plate is welded to the first electrode via the portion to be welded. The welding may be of any type, and for example, may be laser welding or resistance welding. In the welding step, the portion to be welded becomes a welded portion that is welded to the first electrode, and regions on both sides of the welded portion on the first current collector plate (or regions arranged to sandwich the welded portion) remain as at least a pair of magnetized portions having a magnetic force larger than the magnetic force of the welded portion. Such a pair of magnetized portions can capture scattered materials (made of the constituent materials of the first current collector plate, etc.) that may be generated in the welding step, thereby making it possible to suppress an internal short circuit in the battery.

In the welding step, the welded portion may be completely demagnetized. For example, it is conceivable to completely demagnetize the welded portion by heating the entire welded portion to a temperature larger than or equal to the Curie temperature of the constituent material of the first current collector plate.

In the magnetization step, the region of the first current collector plate corresponding to one magnetized portion and the region of the first current collector plate corresponding to the other magnetized portion may be magnetized in mutually opposite directions. This makes it possible to even more efficiently capture scattered materials generated in the welding step.

In the magnetization step, the region of the first current collector plate corresponding to the one magnetized portion and the region of the first current collector plate corresponding to the other magnetized portion may be magnetized in the same direction. In this case, the magnetization can be easily performed.

In the magnetization step, the first current collector plate may be magnetized by a magnet having a residual magnetic flux density of 8000 G or more. The residual magnetic flux density of the magnet may be, for example, 8000 G or more, preferably 9000 G or more, and more preferably 10000 G or more. By using a magnet having such a residual magnetic flux density, the first current collector plate can be magnetized with a strength sufficient to capture scattered materials.

In the first current collector plate, the portion to be welded may have a recessed shape that is recessed more than the regions on both sides thereof. In the magnetization step, the first current collector plate may be magnetized by bringing a magnet close to the first current collector plate from an opening side of the recessed portion to be welded. As a result, in the magnetization step, the distance between the portion to be welded and the magnet is longer than the distance between the magnet and the regions on both sides of the portion to be welded. Accordingly, the portion to be welded is magnetized less strongly than the regions on both sides thereof. Here, the regions on both sides of the portion to be welded correspond to regions that will remain as magnetized portions in the welding step. Accordingly, with this configuration, the strength relationship of the magnetic forces between the welded portion and the magnetized portions according to the present disclosure can be more easily achieved.

As described above, according to the present disclosure, materials scattered during welding are captured by the first current collector plate having the magnetized portions, and therefore an internal short circuit in the battery caused by the scattered materials can be suppressed.

Hereinafter, an example of a battery and a battery manufacturing method according to the present disclosure will be specifically described with reference to the drawings. The constituent elements and steps described above can be applied to the constituent elements and steps of the battery and the battery manufacturing method of the example described below. The constituent elements and steps of the battery and the battery manufacturing method of the example described below may be modified based on the above description. In addition, the matters described below may be applied to the above-described embodiment. Among the constituent elements and steps of the battery and the battery manufacturing method of the example described below, constituent elements and steps that are not essential to the battery and the battery manufacturing method according to the present disclosure may also be omitted. Note that the diagrams shown below are schematic and do not accurately reflect the shapes and numbers of actual members.

### <First Embodiment>

A first embodiment of the present disclosure will be described. A battery 10 of this embodiment is a secondary battery capable of repeated charging and discharging, and may be, for example, a lithium secondary battery (lithium metal secondary battery) or a lithium ion battery. Hereinafter, the configuration of the battery 10 will first be described, followed by a description of a battery manufacturing method.

### (Battery)

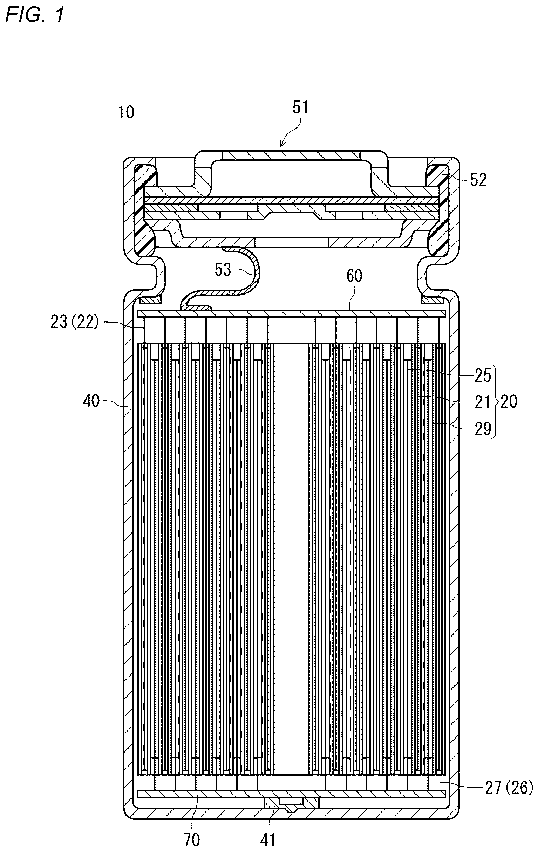

The battery 10 of this embodiment includes a wound electrode group 20, a first current collector plate 60, a second current collector plate 70, a case 40, and a sealing plate 51, as shown in FIG. 1.

The electrode group 20 is formed by winding a first electrode 21 and a second electrode 25 that are each in the form of a long sheet with a separator 29 in the form of a long sheet interposed therebetween. In this embodiment, the first electrode 21 is a positive electrode and the second electrode 25 is a negative electrode, but there is no limitation to this. Although the separator 29 is exposed at the outermost peripheral portion of the electrode group 20, there is no limitation to this. For example, a first current collector 22 or a second current collector 26 described below may be exposed at the outermost peripheral portion of the electrode group 20.

The first electrode 21 has the first current collector 22 in the form of a long sheet and a first active material layer (not shown) provided on the surface of the first current collector 22. In this embodiment, the first active material layer is provided on both sides of the first current collector 22, but there is no limitation to this. The first current collector is constituted of, for example, an aluminum foil or an aluminum alloy foil.

The first current collector 22 includes a first exposed portion 23 that is located at one end (the upper end in FIG. 1) in a direction perpendicular to the longitudinal direction of the first current collector 22, and on which the first active material layer is not provided. The first exposed portion 23 is a strip-shaped region extending along the longitudinal direction of the first current collector 22.

The second electrode 25 includes the second current collector 26 in the form of a long sheet. In this embodiment, the second electrode 25 further includes a second active material layer (not shown) provided on the surface of the second current collector 26, but there is no limitation to this. The second current collector 26 is constituted of, for example, a copper foil or a copper alloy foil.

The second current collector 26 includes a second exposed portion 27 that is located at one end (the lower end in FIG. 1) in a direction perpendicular to the longitudinal direction of the second current collector 26, and on which the second active material layer is not provided. The second exposed portion 27 is a strip-shaped region extending along the longitudinal direction of the second current collector 26.

The first current collector plate 60 is connected to the first exposed portion 23 through welding, and is electrically connected to the first current collector 22. The first current collector plate 60 is constituted of, for example, stainless steel. The configuration of the first current collector plate 60 will be described in detail later.

The second current collector plate 70 is connected to the second exposed portion 27 through welding, and is electrically connected to the second current collector 26. The second current collector plate 70 is constituted of, for example, a nickel alloy. The second current collector plate 70 may have a configuration similar to that of the first current collector plate 60, which will be described later. For example, the second current collector plate 70 may also include a groove portion serving as a welded portion and a pair of magnetized portions arranged on both sides of the groove portion.

The case 40 is made of metal and is formed into a bottomed cylindrical shape with an opening at one end (the upper end in FIG. 1). A welding member 41 is provided on the inner bottom surface of the case 40, and the second current collector plate 70 is welded to this welding member 41. Accordingly, the case 40 of this embodiment functions as an external negative electrode terminal.

The sealing plate 51 seals the opening of the case 40. A gasket 52 is disposed on the peripheral edge of the sealing plate 51, and the inside of the case 40 is hermetically sealed by crimping the open end of the case 40 to the gasket 52. The sealing plate 51 is electrically connected to the first current collector plate 60 via a metal tab 53. Accordingly, the sealing plate 51 of this embodiment functions as an external positive electrode terminal.

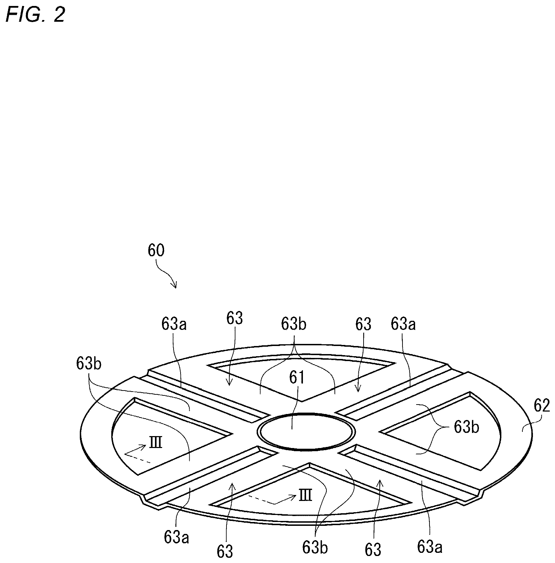

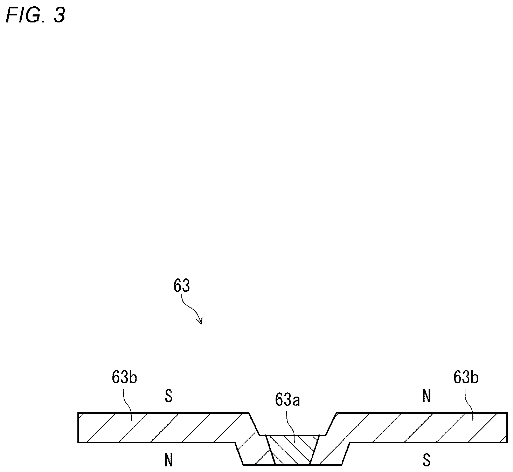

As shown in FIGS. 2 and 3, the first current collector plate 60 is plate-shaped as a whole. The first current collector plate 60 has a central portion 61, an outer peripheral ring portion 62, and a plurality of (in this example, four) arm portions 63 extending radially between the central portion 61 and the outer peripheral ring portion 62. Each arm portion 63 has a groove portion 63a formed therein, which extends along the direction in which the arm portion 63 extends. The groove portion 63a is welded to the first exposed portion 23 of the first electrode 21, which is not shown in FIGS. 2 and 3. The width of the groove portion 63a is larger on the side opposite to the first electrode 21 (upper side in FIG. 3) than on the first electrode 21 side (lower side in FIG. 3). Specifically, the width of the groove portion 63a increases from the first electrode 21 side toward the opposite side. The groove portion 63a is an example of a welded portion.

Each arm portion 63 has a pair of magnetized portions 63b that are arranged to sandwich the groove portion 63a and are magnetized. The pair of magnetized portions 63b extend in the direction in which the arm portion 63 extends. In the pair of magnetized portions 63b, a magnetization direction of one magnetized portion 63b and a magnetization direction of the other magnetized portion 63b are mutually opposite directions. Specifically, one magnetized portion 63b (the magnetized portion 63b on the left side in FIG. 3) is magnetized such that the bottom surface is an N pole and the top surface is an S pole, whereas the other magnetized portion 63b is magnetized such that the top surface is an N pole and the bottom surface is an S pole.

In this embodiment, the groove portion 63a has no magnetic force (or has zero magnetic force), whereas the pair of magnetized portions 63b are magnetized. Accordingly, the magnetic force of the groove portion 63a is smaller than the magnetic force of the magnetized portion 63b. Note that the groove portion 63a may have a non-zero magnetic force that is smaller than the magnetic force of the magnetized portions 63b.

### (Battery Manufacturing Method)

Next, a method for manufacturing the above-described battery 10 will be described. The battery manufacturing method of this embodiment includes a first preparation step, a second preparation step, a magnetization step, and a welding step.

In the first preparation step, the electrode group 20 is prepared by winding the first electrode 21 and the second electrode 25 with the separator 29 interposed therebetween.

In the second preparation step, the first current collector plate 60 having the plurality of (four in this example) groove portions 63a is prepared. The groove portions 63a are examples of portions to be welded.

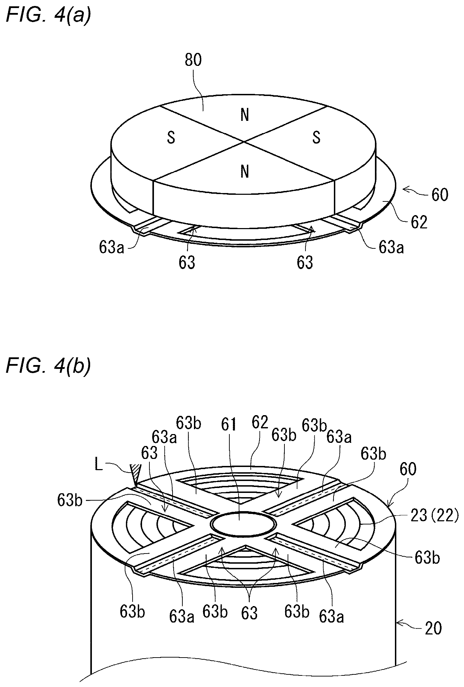

In the magnetization step, as shown in FIG. 4(a), the first current collector plate 60 is magnetized using a magnet 80 having a plurality of poles (four in this example). The magnet 80 has a residual magnetic flux density of 8000 G or more. In the magnetization step, the first current collector plate 60 is magnetized while aligning the boundaries between the poles of the magnet 80 with the groove portions 63a. In the magnetization step, the first current collector plate 60 is magnetized by bringing the magnet 80 close to the first current collector plate 60 from the opening side of the groove portions 63a (the upper side in FIG. 4(a)). As a result, the region of the first current collector plate 60 corresponding to the one magnetized portion 63b and the region of the first current collector plate 60 corresponding to the other magnetized portion 63b are magnetized in mutually opposite directions.

In the welding step, as shown in FIG. 4(b), the first current collector plate 60 is welded to the first exposed portion 23 of the first electrode 21 via the groove portions 63a through, for example, laser welding. In the welding step, the first electrode 21 and the first current collector plate 60 are welded together by irradiating the regions indicated by broken lines in FIG. 4(b) with a laser L. In the welding step, the groove portions 63a are completely demagnetized, whereas the regions on both sides of each of the groove portions 63a are not demagnetized. As a result, in each arm portion 63 of the first current collector plate 60, the regions on both sides of the groove portion 63a remain as the pair of magnetized portions 63b having a magnetic force larger than the magnetic force of the groove portion 63a.

Thereafter, the second current collector plate 70 is welded to the second current collector 26 to form an electrode group unit (not shown), the obtained electrode group unit is accommodated in and joined to the case 40, and after injection of an electrolytic solution and sealing with the sealing plate 51, the battery 10 of this embodiment can be obtained.

### <Second Embodiment>

A second embodiment of the present disclosure will be described. A battery 10 of this embodiment differs from the first embodiment in the configuration of the first current collector plate 60. The following mainly describes the differences from the above-described first embodiment.

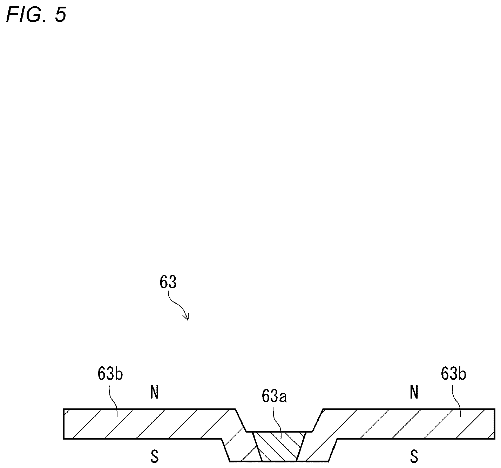

As shown in FIG. 5, in this embodiment, in the pair of magnetized portions 63b, a magnetization direction of one magnetized portion 63b and a magnetization direction of the other magnetized portion 63b are the same direction. Specifically, in this embodiment, both magnetized portions 63b are magnetized such that the upper surfaces are N poles and the lower surfaces are S poles. Note that the magnetization direction of the magnetized portions 63b may be a direction opposite to that described above.

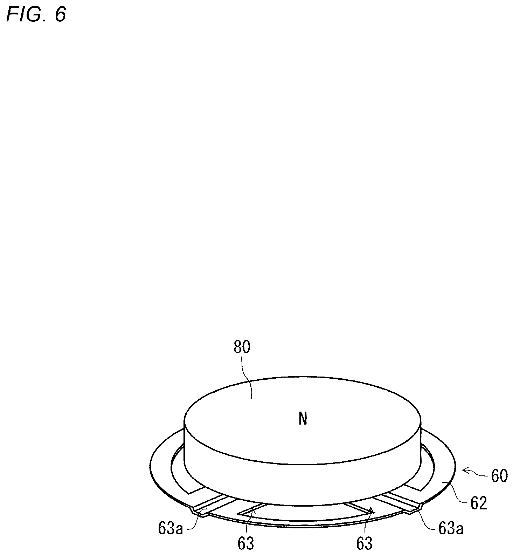

As shown in FIG. 6, in the magnetization step of this embodiment, the first current collector plate 60 is magnetized using a magnet 80 that is entirely magnetized in one direction. As a result, the region of the first current collector plate 60 corresponding to the one magnetized portion 63b and the region of the first current collector plate 60 corresponding to the other magnetized portion 63b are magnetized in the same direction.

Although the present invention has been described in terms of presently preferred embodiments, such disclosure is not to be interpreted as limiting. Various modifications and variations will no doubt become apparent to those skilled in the art to which this invention pertains upon reading the above disclosure. It is therefore intended that the appended claims be interpreted as encompassing all such variations and modifications as do not depart from the scope of the invention.

### [Industrial Applicability]

The present disclosure can be used in a battery and a battery manufacturing method.

### [Reference Signs List]

10: battery
   20: electrode group
      21: first electrode
         22: first current collector
         23: first exposed portion
      25: second electrode
         26: second current collector
         27: second exposed portion
      29: separator
   40: case
   41: welding member
   51: sealing plate
   52: gasket
   53: metal tab
   60: first current collector plate
      61: central portion
      62: outer peripheral ring portion
      63: arm portion
         63a: groove portion (welded portion, portion to be welded)
         63b: magnetized portion
   70: second current collector plate
80: magnet
L: laser

## Claims

1. A battery comprising:
an electrode group formed by winding a first electrode and a second electrode with a separator interposed therebetween; and
a first current collector plate having at least one welded portion welded to the first electrode,
**characterized in that** the first current collector plate has at least a pair of magnetized portions that are arranged to sandwich the welded portion and are magnetized, and
a magnetic force of the welded portion is smaller than a magnetic force of the magnetized portions.

2. The battery according to claim 1, wherein the welded portion has no magnetic force.

3. The battery according to claim 1 or 2, wherein in the pair of magnetized portions, a magnetization direction of one of the magnetized portions and a magnetization direction of another of the magnetized portions are mutually opposite directions.

4. The battery according to claim 1 or 2, wherein in the pair of magnetized portions, a magnetization direction of one of the magnetized portions and a magnetization direction of another of the magnetized portions are the same direction.

5. The battery according to claim 1 or 2, wherein a width of the welded portion is larger on a side opposite to the first electrode than on the first electrode side.

6. A battery manufacturing method comprising:
a first preparation step of preparing an electrode group formed by winding a first electrode and a second electrode with a separator interposed therebetween;
a second preparation step of preparing a first current collector plate having at least one portion to be welded;
and
a welding step of welding the first current collector plate to the first electrode via the portion to be welded,
**characterized by** a magnetization step of magnetizing the first current collector plate, wherein in the welding step, the portion to be welded becomes a welded portion welded to the first electrode, and regions on both sides of the welded portion in the first current collector plate remain as at least a pair of magnetized portions having a magnetic force larger than a magnetic force of the welded portion.

7. The battery manufacturing method according to claim 6, wherein in the welding step, the welded portion is completely demagnetized.

8. The battery manufacturing method according to claim 6 or 7, wherein in the magnetization step, a region of the first current collector plate corresponding to one of the magnetized portions and a region of the first current collector plate corresponding to another of the magnetized portions are magnetized in mutually opposite directions.

9. The battery manufacturing method according to claim 6 or 7, wherein in the magnetization step, a region of the first current collector plate corresponding to one of the magnetized portions and a region of the first current collector plate corresponding to another of the magnetized portions are magnetized in the same direction.

10. The battery manufacturing method according to claim 6 or 7, wherein in the magnetization step, the first current collector plate is magnetized by a magnet having a residual magnetic flux density of 8000 G or more.

11. The battery manufacturing method according to claim 10,
wherein in the first current collector plate, the portion to be welded has a recessed shape that is recessed with respect to regions on both sides of the portion to be welded, and
in the magnetization step, the first current collector plate is magnetized by bringing the magnet close to the first current collector plate from an opening side of the portion to be welded that has the recessed shape.

## Patentansprüche

1. Batterie, umfassend:
eine Elektrodengruppe, die durch Wickeln einer ersten Elektrode und einer zweiten Elektrode mit einem dazwischen angeordneten Separator gebildet ist; und
eine erste Stromkollektorplatte mit mindestens einem geschweißten Abschnitt, der mit der ersten Elektrode verschweißt ist,
**dadurch gekennzeichnet, dass**
die erste Stromkollektorplatte mindestens ein Paar magnetisierter Abschnitte aufweist, die angeordnet sind, um den geschweißten Abschnitt zwischen sich einzuschließen, und magnetisiert sind, und
eine magnetische Kraft des geschweißten Abschnitts kleiner ist als eine magnetische Kraft der magnetisierten Abschnitte.

2. Batterie nach Anspruch 1, wobei der geschweißte Abschnitt keine magnetische Kraft aufweist.

3. Batterie nach Anspruch 1 oder 2, wobei bei dem Paar magnetisierter Abschnitte eine Magnetisierungsrichtung eines der magnetisierten Abschnitte und eine Magnetisierungsrichtung eines anderen der magnetisierten Abschnitte zueinander entgegengesetzte Richtungen sind.

4. Batterie nach Anspruch 1 oder 2, wobei bei dem Paar magnetisierter Abschnitte eine Magnetisierungsrichtung eines der magnetisierten Abschnitte und eine Magnetisierungsrichtung eines anderen der magnetisierten Abschnitte dieselbe Richtung sind.

5. Batterie nach Anspruch 1 oder 2, wobei eine Breite des geschweißten Abschnitts auf einer der ersten Elektrode gegenüberliegenden Seite größer ist als auf der Seite der ersten Elektrode.

6. Verfahren zur Herstellung einer Batterie, umfassend:
einen ersten Vorbereitungsschritt zum Vorbereiten einer Elektrodengruppe, die durch Wickeln einer ersten Elektrode und einer zweiten Elektrode mit einem dazwischen angeordneten Separator gebildet ist;
einen zweiten Vorbereitungsschritt zum Vorbereiten einer ersten Stromkollektorplatte mit mindestens einem zu schweißenden Abschnitt; und
einen Schweißschritt zum Schweißen der ersten Stromkollektorplatte an die erste Elektrode über den zu schweißenden Abschnitt,
**gekennzeichnet durch** einen Magnetisierungsschritt zum Magnetisieren der ersten Stromkollektorplatte, wobei
in dem Schweißschritt der zu schweißende Abschnitt zu einem geschweißten Abschnitt wird, der mit der ersten Elektrode verschweißt ist, und Bereiche auf beiden Seiten des geschweißten Abschnitts in der ersten Stromkollektorplatte als mindestens ein Paar magnetisierter Abschnitte mit einer magnetischen Kraft verbleiben, die größer ist als eine magnetische Kraft des geschweißten Abschnitts.

7. Verfahren zur Herstellung einer Batterie nach Anspruch 6, wobei in dem Schweißschritt der geschweißte Abschnitt vollständig entmagnetisiert wird.

8. Verfahren zur Herstellung einer Batterie nach Anspruch 6 oder 7, wobei in dem Magnetisierungsschritt ein Bereich der ersten Stromkollektorplatte, der einem der magnetisierten Abschnitte entspricht, und ein Bereich der ersten Stromkollektorplatte, der einem anderen der magnetisierten Abschnitte entspricht, in zueinander entgegengesetzten Richtungen magnetisiert werden.

9. Verfahren zur Herstellung einer Batterie nach Anspruch 6 oder 7, wobei in dem Magnetisierungsschritt ein Bereich der ersten Stromkollektorplatte, der einem der magnetisierten Abschnitte entspricht, und ein Bereich der ersten Stromkollektorplatte, der einem anderen der magnetisierten Abschnitte entspricht, in derselben Richtung magnetisiert werden.

10. Verfahren zur Herstellung einer Batterie nach Anspruch 6 oder 7, wobei in dem Magnetisierungsschritt die erste Stromkollektorplatte durch einen Magneten mit einer remanenten Magnetflussdichte von 8000 G oder mehr magnetisiert wird.

11. Verfahren zur Herstellung einer Batterie nach Anspruch 10,
wobei in der ersten Stromkollektorplatte der zu schweißende Abschnitt eine vertiefte Form aufweist, die bezüglich Bereichen auf beiden Seiten des zu schweißenden Abschnitts vertieft ist, und
in dem Magnetisierungsschritt die erste Stromkollektorplatte magnetisiert wird, indem der Magnet von einer Öffnungsseite des zu schweißenden Abschnitts, der die vertiefte Form aufweist, nahe an die erste Stromkollektorplatte herangeführt wird.

## Revendications

1. Batterie comprenant :
un groupe d'électrodes formé par enroulement d'une première électrode et d'une deuxième électrode avec un séparateur interposé entre elles ; et
une première plaque collectrice de courant présentant au moins une partie soudée soudée à la première électrode,
**caractérisée en ce que**
la première plaque collectrice de courant présente au moins une paire de parties magnétisées qui sont agencées de manière à prendre en sandwich la partie soudée et qui sont magnétisées, et
une force magnétique de la partie soudée est inférieure à une force magnétique des parties magnétisées.

2. Batterie selon la revendication 1, dans laquelle la partie soudée n'a aucune force magnétique.

3. Batterie selon la revendication 1 ou 2, dans laquelle, dans la paire de parties magnétisées, une direction de magnétisation de l'une des parties magnétisées et une direction de magnétisation d'une autre des parties magnétisées sont des directions mutuellement opposées.

4. Batterie selon la revendication 1 ou 2, dans laquelle, dans la paire de parties magnétisées, une direction de magnétisation de l'une des parties magnétisées et une direction de magnétisation d'une autre des parties magnétisées sont la même direction.

5. Batterie selon la revendication 1 ou 2, dans laquelle une largeur de la partie soudée est plus grande du côté opposé à la première électrode que du côté de la première électrode.

6. Procédé de fabrication de batterie comprenant :
une première étape de préparation consistant à préparer un groupe d'électrodes formé par enroulement d'une première électrode et d'une deuxième électrode avec un séparateur interposé entre elles ;
une deuxième étape de préparation consistant à préparer une première plaque collectrice de courant présentant au moins une partie à souder ; et
une étape de soudage consistant à souder la première plaque collectrice de courant à la première électrode par l'intermédiaire de la partie à souder,
**caractérisé par** une étape de magnétisation consistant à magnétiser la première plaque collectrice de courant, dans lequel
dans l'étape de soudage, la partie à souder devient une partie soudée soudée à la première électrode, et des régions de part et d'autre de la partie soudée dans la première plaque collectrice de courant demeurent en tant qu'au moins une paire de parties magnétisées ayant une force magnétique supérieure à une force magnétique de la partie soudée.

7. Procédé de fabrication de batterie selon la revendication 6, dans lequel, dans l'étape de soudage, la partie soudée est complètement démagnétisée.

8. Procédé de fabrication de batterie selon la revendication 6 ou 7, dans lequel, dans l'étape de magnétisation, une région de la première plaque collectrice de courant correspondant à l'une des parties magnétisées et une région de la première plaque collectrice de courant correspondant à une autre des parties magnétisées sont magnétisées dans des directions mutuellement opposées.

9. Procédé de fabrication de batterie selon la revendication 6 ou 7, dans lequel, dans l'étape de magnétisation, une région de la première plaque collectrice de courant correspondant à l'une des parties magnétisées et une région de la première plaque collectrice de courant correspondant à une autre des parties magnétisées sont magnétisées dans la même direction.

10. Procédé de fabrication de batterie selon la revendication 6 ou 7, dans lequel, dans l'étape de magnétisation, la première plaque collectrice de courant est magnétisée par un aimant ayant une densité de flux magnétique rémanente de 8000 G ou plus.

11. Procédé de fabrication de batterie selon la revendication 10,
dans lequel, dans la première plaque collectrice de courant, la partie à souder a une forme en retrait qui est en retrait par rapport aux régions de part et d'autre de la partie à souder, et
dans l'étape de magnétisation, la première plaque collectrice de courant est magnétisée en rapprochant l'aimant de la première plaque collectrice de courant depuis un côté d'ouverture de la partie à souder qui a la forme en retrait.
